(19) Europäisches Patentamt
European Patent Office
Office européen des brevets

(11) **EP 3 210 472 B1**

(12) **EUROPEAN PATENT SPECIFICATION**

(45) Date of publication and mention
of the grant of the patent:
**06.02.2019 Bulletin 2019/06**

(51) Int Cl.:
*A01N 43/80* (2006.01)          *A01N 43/32* (2006.01)
*A01N 43/84* (2006.01)          *A01N 47/38* (2006.01)
*A01N 43/653* (2006.01)          *A01P 3/00* (2006.01)

(21) Application number: **17162742.5**

(22) Date of filing: **20.08.2012**

(54) **SYNERGISTIC FUNGICIDE COMPOSITION**

SYNERGISTISCHE FUNGIZIDZUSAMMENSETZUNG

COMPOSITION FONGICIDE SYNERGIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2012 CN 201210287687**

(43) Date of publication of application:
**30.08.2017 Bulletin 2017/35**

(62) Document number(s) of the earlier application(s) in
accordance with Art. 76 EPC:
**12883005.6 / 2 885 971**

(73) Proprietor: **Jiangsu Huifeng Agrochemical Co.,
Ltd.
Dafeng, Jiangsu 224100 (CN)**

(72) Inventor: **Zhong, Hangen
Dafeng City, Jiangsu 224100 (CN)**

(74) Representative: **Engelhard, Markus
Boehmert & Boehmert
Anwaltspartnerschaft mbB
Pettenkoferstrasse 22
80336 München (DE)**

(56) References cited:
**CN-A- 101 999 372          CN-A- 102 100 233
CN-A- 102 239 860          CN-A- 102 258 037
US-A1- 2010 184 792          US-A1- 2012 128 750**

Description

BACKGROUND

**Technical Field**

The present invention belongs to the field of agricultural plant protection, particularly to a fungicide composition with improved performance, and specifically relates to a fungicide composition containing two active components.

**Related Art**

Benzisothiazolinone is a fungicide and has the following functions and features: being a novel broad-spectrum fungicide, and being effective in preventing and treating fungal diseases. In the fungicidal process, the nucleus structure of the pathogenic fungi is destroyed, resulting lost of the heat part and death due to failure, the metabolism of the pathogenic fungus cells was interfered, resulting in physiologic disorders, and finally, leading to death. The pathogenic fungi are completely killed, and the desired effect of eradicating pathogenic fungi is achieved. Benzisothiazolinone is mainly used in preventing and treating cucumber downy mildew, pear scab, apple scab, orange anthracnose, grape anthracnose, and is effective in preventing and treating various bacterial diseases and fungal diseases.

Dimethomorph is a morpholine-based broad-spectrum fungicide, has a unique mode of action on fungi of *Peronosporales* and *Peronophthoraceae* of phycomycetes, and is mainly to cause degradation of sporangium wall, so as to cause death of fungi. Dimethomorph is fungicide dedicated to oomycetes fungi, and has the functions and features of destroying the formation of cell membrane, having effects in all stages of life cycle of oomycetes, being particularly sensitive in the formation stages of sporangiophores and oospores, being inhibited at a very low concentration (0.25 $\mu$g/ml), and having no cross resistance with phenylamides reagents.

Dithianon is a protective fungicide used for various leaf diseases of many pomefruits and stone fruits, has multi-mechanism. By reacting with a sulfur-containing groups and interfering with cell respiration, dithianon inhibits a series of fungal enzymes, and finally causes death of fungi. Dithianon has good protective activity and a certain therapeutic activity. Suitable fruit crops include pomefruits and stone fruits such as apple, pear, peach, apricots, cherry, citrus, coffee, grape, strawberry and hop. Except powdery mildew, objects of prevention and treatment include almost all fruit tree diseases such as scab, mildew disease, leaf spot, rust, anthracnose, scab, downy mildew and brown rot.

Iprodione is a high-efficient dicarbonylimides broad-spectrum contact-type fungicide, has a certain treatment and prevention effect, and can be absorbed through roots and exert the systemic action. Iprodione is effective in preventing and treating fungi resistant to benzimidazoles absorption-type fungicides, and is suitable in preventing and treating diseases such as early leaf disease, gray mold and early blight of various fruit trees, vegetables, fruits and other crops.

Epoxiconazol is an absorption-type triazoles fungicide, has the mechanism of action of inhibiting synthesis of ergosterol pathogenic fungus and hindering the formation of the cell wall of pathogenic fungi. Epoxiconazol not only has good protecting, treating and eradicating activity, but also has absorption and good residual activity. Epoxiconazol can improve the chitinase activity of crops, thereby causing shrink of fungal haustoria, and inhibiting the invasion of pathogenic fungi, which is the unique characteristic of epoxiconazol among all triazoles products. Epoxiconazol has a good prevention and treatment effect on diseases such as leaf spot, powdery mildew and rust of crops such as bananas, garlic, celery, beans, melons, asparagus, peanuts and sugar beet and anthracnose, white rot of grapes.

Actual experiences of fungicide have shown that repeated application of one specific active compound to prevent and treat fungi will results in quick selectivity of fungal strains in many cases, in order to lower risk of selectivity of fungal strains, a mixture of compounds of different activities are commonly used to prevent and treat harmful fungi presently. Active compounds having different mechanisms of action are combined to delay the generation of resistance, and reduce the application amount and prevention and treatment costs.

CN 101999372A describes fungicidal compositions containing benziothiazolinone and difenoconazole.

CN 102100233A relates to a sterilization composition containing benziothiazolinone and hexaconazole.

CN 102258037A describes a sterilization composition containing benziothiazolinone and tebuconazole.

CN 102239860A describes a synergistic bactericidal composition containing benziothiazolinone and tricyclazole.

US 2010/0184792 A1 describes co-crystals of pyrimethanil and dithianon.

US 2012/128750 A1 relates to a process for preparing an organic pesticide compound.

**SUMMARY**

In view of the problems of fungicide resistance and residual in soil in practical applications, the technical problem to be solved by the present invention is: screening two fungicides of different fungicidal principles for combination, to improve the prevention and treatment effect of the fungicide, delay the emergence of resistance, reduce the application amount and prevention and treatment costs.

In order to solve the above technical problems, the present invention provides a fungicide composition in accordance with the appended claims. The composition contains two active components A and B, the active component A is benzisothiazolinone, and the active component B is epoxiconazol, wherein the weight ratio of the two components is 1:50 to 50:1. The inventors find from experiments that the fungicide composition has a significant synergistic effect, and more importantly, the application amount and the use-cost are reduced. Compounds containing the component A and the component B have different structures, different mechanisms of action, the fungicidal spectrum can be expanded by combination of the two components, and the emergence and development speed of resistance of the pathogenic fungi is delayed, and moreover, the component A and the component B have no cross resistance.

Another objective of the present invention is to provide a method for preparing a fungicide composition containing two active components A and B and a use of the fungicide composition containing two active components A and B in the preventing and treating food crop diseases in the field of agriculture.

In the fungicide composition, the weight ratio of the component A and the component B is 1:50 to 50:1, and preferably 1:30 to 30:1.

The fungicide composition of the present invention is preferably composed of 6 wt% to 92 wt% of active components and 94 wt% to 8 wt% of fungicide adjuvants.

The present invention also provides a use of a fungicide composition according to the present invention containing a component A (benzisothiazolinone) and a component B which is epoxiconazol, wherein the weight ratio of the two components is 1:50 to 50:1, in preventing and treating plant diseases.

The composition further preferably contains a support, an adjuvant and/or a surfactant. During application, a common adjuvant can be mixed with the composition.

Suitable adjuvants may be a solid or liquid, and are generally a substance commonly used in formulation processing process, for example, natural or regenerated minerals, solvents, dispersing agents, wetting agents, adhesives, thickeners, binders or fertilizers.

A method for applying the composition of the present invention includes: applying the composition of the present invention on the aboveground part of plants, especially the leaves or foliages. The frequency of application and application amount depend on the biological characteristics and the climate survival conditions of the pathogen. A liquid formulation containing the composition may be used to wet the plant growing place such as rice field, or the composition may be applied in the soil in the solid form, such as in the granular form (soil application), so that the composition can get into the plant body (systemic action) through the plant roots from the soil.

These compositions may merely contain the active components and be applied, and may also mixed with additives for use, so the composition of the present invention may be formulated into various formulations, for example, wettable powder, a suspension, an oil suspension, a water dispersible granule, an emulsion in water and a microemulsion. According to the properties of these compositions and the purpose to be achieved by applying the composition as well as the environmental conditions, the method for applying the composition may be selected to be spraying, atomizing, dusting, scattering or pouring and the like.

The composition of the present invention can be formulated into various formulations by known methods, the active components and an adjuvant such as a solvent and a solid support may be fully mixed with a surfactant and granulated when required, and formulated into a desired formulation.

The solvent may be selected from: aromatic hydrocarbons, and preferably aromatic hydrocarbons containing 8 to 12 carbon atoms, for example, xylene mixture or substituted benzene; phthalates, for example, dibutyl phthalates and dioctyl phthalate; aliphatic hydrocarbons, for example, cyclohexane and paraffins; alcohols and glycols and ethers and esters thereof, for example, ethanol, ethylene glycol, ethylene glycol monomethyl; ketones, for example, cyclohexanone; strongly polar solvent, for example, N-methyl-2-pyrrolidone, dimethyl sulfoxide and dimethylformamide; and vegetable oils, for example, soybean oil.

The solid supports useful in powder and dispersible granule are generally natural mineral fillers, for example, talc, kaolin, montmorillonite and attapulgite. For the control of the physical performance of the composition, highly dispersed silicic acid or a highly dispersed adsorbing polymer support such as a granular adsorbing support and non-adsorbing support may be added, where a suitable granular adsorbing support is porous, for example, pumice, bentonite and bentonite; a suitable non-adsorbing support is, for example, calcite and sand. Furthermore, a large amount of inorganic or organic preformed granular materials, especially, dolomite, may be used as support.

According to the chemical properties of the active components in the composition of the present invention, a suitable surfactant is lignosulfonic acid, naphthalenesulfonic acid, phenolsulfonic acid, alkaline earth metal or ammonium salts, alkylaryl sulfonates, alkyl sulfates, alkyl sulfonates, fatty alcohol sulphates and fatty acids and sulfated fatty alcohol ethylene glycol esters, condensates of sulfonated naphthalene and naphthalene derivatives with formaldehyde, condensates of naphthalene or naphthalenesulfonic acid with phenol and formaldehyde, polyoxyethylene octyl phenyl ether, ethoxylated iso-octyl phenol, octyl phenol, nonylphenol, alkylaryl polyglycol ethers, triutylbenzene polyglycol ethers, tristearylphenyl polyglycol ethers, alkylaryl polyether alcohols, ethoxylated caster oil, polyoxyethylene alkyl ethers, ethylene oxide condensates, ethoxylated polyoxypropylene, lauric acid polyethylene glycol ether acetal, sorbate, lignosulphite wasterwater and methylcellulose.

The two active components in the composition of the present invention have a synergistic effect, and the activity of the composition is more significant than the sum of the expected activity of using single compounds and the individual activity of single compounds. Due to the synergistic effect, the application amount is decreased, and the fungicidal control spectrum is broadened, the prevention and treatment effects can be achieved quickly and last longer, so that by merely one or several times of application, the fungi harmful to plants can be controlled better, and the possible application interval is widened. There features are specially required in the practice process of controlling plant fungi. The composition of the present invention is especially effective for the following food crop diseases: cucumber downy mildew pathogenic fungi, cucumber gray mold, sigatoka, grape downy mildew and litchi blight.

The fungicide composition of the present invention also has other features: 1. the mixture of composition of the present invention has a significant synergistic effect; 2, since the two single components of the composition have great difference in structure, and completely different mechanisms of action, and have no cross resistance, the resistance generated when the two single components are used alone can be delayed; 3. the composition of the present invention is safe to crops and has a good prevention and treatment effect. It is proved by test that, the fungicide composition of the present invention has stable chemical properties and significant synergistic effect, and exhibits a significant synergistic effect and complementary effect on prevention and treatment targets.

## DETAILED DESCRIPTION

In order to make the objective, technical solutions and advantages of the present invention clearer and more comprehensive, the present invention is further described in detail below with the following embodiments.

Percentages in all formulas in the following embodiments all are weight percentages. Processes for processing the preparations of the composition of the present invention all are existing technologies, and may vary according to different conditions.

### I) Embodiments of preparation of formulations

### (I) Processing of water dispersible granule and Embodiments

The active component benzisothiazolinone and epoxiconazol were fully mixed with an adjuvant and a filler at the formula ratio, the mixture was pulverized into wettable powder by airflow, and the wettable powder was mixed with a certain amount of water and then subjected to extrusion granulation, drying and sieving, to obtain the water dispersible granule product.

**Embodiment 7:** 62% benzisothiazolinone ·epoxiconazol water dispersible granule

60% benzisothiazolinone, 2% epoxiconazol, 1% sodium carboxymethyl starch, 4% sodium dodecyl sulfonate, 4% sodium lignosulfonate, 1% xanthan gum, complemented to 100% with attapulgite.

**Embodiment 8:** 62% benzisothiazolinone ·epoxiconazol water dispersible granule

2% benzisothiazolinone, 60% epoxiconazol, 1% ammonium sulfate, 2% alginate, 1% sodium methyl naphthalene sulfonate-formaldehyde condensate, 1% organosilicone, complemented to 100% with bentonite.

### (II) Processing of suspension and embodiments

The active component benzisothiazolinone and epoxiconazol were fully mixed with the components such as a dispersant, a wetting agent, a thickener and water at the formula ratio, the mixture was then subjected to sanding and/or high-speed shearing, to obtain a semi-finished product, and the semi-finished product was fully mixed water after analysis and filtered, to obtain the finished product.

**Embodiment 15:** 55% benzisothiazolinone ·epoxiconazol suspension

50% benzisothiazolinone, 5% epoxiconazol, 7% polyoxyethylene fatty alcohol ether phosphate, 3% white carbon black, 6% glycerol, 2% calcium benzoate, complemented to 100% with water.

**Embodiment 16:** 55% benzisothiazolinone ·epoxiconazol suspension

5% benzisothiazolinone, 50% epoxiconazol, 7% sodium lignosulfonate, 3% white carbon black, 6% ethylene glycol, 1% xanthan gum, complemented to 100% with water.

**(III) Processing of wettable powder and embodiments**

The active component A benzisothiazolinone and the active component B epoxiconazol were fully mixed with various adjuvants and fillers at ratios, and the mixture was pulverized by an ultrafine pulverizer, to obtain a wettable powder.

**Embodiment 26:** 88% benzisothiazolinone ·epoxiconazol wettable powder

2% benzisothiazolinone, 86% epoxiconazol, 2% sodium dodecylbenzene sulfonate, 1% bentonite, 2% calcium lignosulphonate, complemented to 100% with attapulgite.

**Embodiment 27:** 86% benzisothiazolinone ·epoxiconazol wettable powder

84% benzisothiazolinone, 2% epoxiconazol, 1% nekal, 2% polyoxyethylene alkyl ether sulfonate, 15% bentonite, 2% white carbon black, complemented to 100% with diatomite100%.

**Embodiment 28:** 50% benzisothiazolinone ·epoxiconazol wettable powder

25% benzisothiazolinone, 25% epoxiconazol, 6% sodium lignosulfonate, 6% alkyl sulfonate, 11% white carbon black, complemented to 100% with kaolin.

**(IV) Processing of microemulsion and embodiments**

The active component A benzisothiazolinone and the active component B epoxiconazol were completely dissolved in a solvent, and at the same time, an emulsifier, a synergistic effect adjuvant and a cryoprotectant were added with stirring, after the system was fully mixed, water was slowly added to the mixture, and the mixture was fully stirred, to obtain a microemulsion of different contents.

**Embodiment 35:** 12% benzisothiazolinone ·epoxiconazol microemulsion

2% benzisothiazolinone, 10% epoxiconazol, 1% propylene glycol, 13% alkyl benzene sulfonate and alkyl naphthalene sulfonate, 1% thiazone, 11% ethyl acetate, complemented to 100% with water.

**Embodiment 36:** 15% benzisothiazolinone ·epoxiconazol microemulsion

10% benzisothiazolinone, 5% epoxiconazol, 14% sorbic acid, 1% thiazone, 7% calcium dodecylbenzene sulfonate, 2% polyethylene glycol, complemented to 100% with water.

**(V) Processing of emulsion in water and embodiments**

In an emulsifying kettle, the active component A benzisothiazolinone and the active component B epoxiconazol were fully mixed with a solvent and an adjuvant under mechanical stirring, an emulsifier and a stabilizer were then added and fully stirred, finally, water was added, and the mixture was stirred for 10 to 30 min at a rotation rate of 100 to 12000 rpm, to obtain a uniform emulsion product.

**Embodiment 43:** 21% benzisothiazolinone ·epoxiconazol emulsion in water

20% benzisothiazolinone, 1% epoxiconazol, 1% propylene glycol, 1% xanthan gum, 2% plyisobutylene anhydride-polyethylene glycol copolymer, 2% polyoxyethylene block copolymer, 1.5% organic silicon defoamer, complemented to 100% with water.

**Embodiment 44:** 42% benzisothiazolinone ·epoxiconazol emulsion in water

2% benzisothiazolinone, 40% epoxiconazol, 2% polyoxyethylene castor oil, 1% N-dodecylpyrrolidone, 2% glycerol, 1.1% polyvinyl alcohol, 2% calcium benzoate, 1% isooctanol, complemented to 100% with water.

**(VI) Processing of oil suspension and embodiments**

The active component A benzisothiazolinone and the active component B epoxiconazol were mixed with various components such as a dispersant, a stabilizer, a defoamer and a solvent at the formula ratio, and the mixture was placed in a sanding kettle for milling, then sent to a homogenizer and fully mixed, to obtain the finished product.

**Embodiment 51:** 30% benzisothiazolinone ·epoxiconazol oil suspension

25% benzisothiazolinone, 5% epoxiconazol, 8% naphthalene sulfonic acid-formaldehyde condensate, 5% diatomite, 2% aluminium-magnesium silicate, complemented to 100% with dichloroethane.

**Embodiment 52:** 45% benzisothiazolinone ·epoxiconazol oil suspension

15% benzisothiazolinone, 30% epoxiconazol, 11% sodium lignosulfonate, 4% aerosil, 2% aluminium-magnesium silicate, complemented to 100% with castor oil.

**II) Efficacy verification test**

(I) Biological assay embodiments

4. Test of toxicity of compound benzisothiazolinone and epoxiconazol on cucumber downy mildew

Subjects for test: cucumber downy mildew pathogenic fungi

The incidence of whole cucumber leaves was investigated according to test grading level, and the disease index and the prevention and treatment effect were calculated.
The prevention and treatment effect was converted into probability values (y), the heights of the chemicals (μg/ml) were converted into logarithm values (x), the toxicity equation and the median inhibition concentration EC50 were calculated by the least square method, and the toxicity index level co-toxicity coefficient (CTC) of the chemicals was calculated according to the Sun Yunpei's method.

Actual toxicity index (ATI)=(EC50 of the standard reagent/ EC50 of the test reagent) x 100

Theoretical toxicity index (TTI)=the toxicity index of chemical A x the percentage of A in the mixture + the toxicity index of chemical B x the percentage of B in the mixture

Co-toxicity coefficient (CTC)=[Actual toxicity index (ATI) of the mixture/Theoretical toxicity index (TTI) of the mixture] x 00

CTC≤80, indicating that the composition had the antagonistic effect, 80<CTC<120, indicating that the composition had the additive effect, and CTC≥120, indicating that the composition had the synergistic effect.

Table 4 Analysis of results of test of toxicity of benzisothiazolinone, epoxiconazol and compound benzisothiazolinone and epoxiconazol on cucumber downy mildew

| Names of reagents | EC$_{50}$ (μg/ml) | ATI | TTI | Co-toxicity coefficient (CTC) |
|---|---|---|---|---|
| Benzisothiazolinone | 3.81 | 100.00 | / | / |
| Epoxiconazol | 4.25 | 89.65 | / | / |
| Benzisothiazolinone: Epoxiconazol ratio=50:1 | 2.90 | 131.343 | 99.797 | 131.61 |
| Benzisothiazolinone:epoxiconazol ratio=30:1 | 2.56 | 148.722 | 99.666 | 149.22 |
| Benzisothiazolinone:epoxiconazol ratio=10:1 | 1.97 | 193.680 | 99.059 | 195.52 |
| Benzisothiazolinone:epoxiconazol ratio=1:1 | 1.59 | 240.106 | 94.825 | 253.21 |
| Benzisothiazolinone:epoxiconazol ratio=1:10 | 1.94 | 196.383 | 90.591 | 216.78 |
| Benzisothiazolinone:epoxiconazol ratio=1:30 | 3.02 | 126.274 | 89.645 | 140.86 |
| Benzisothiazolinone:epoxiconazol ratio=1:50 | 3.51 | 108.403 | 89.353 | 121.32 |

The results (Table 4) show that, the compound benzisothiazolinone and epoxiconazol has significantly improved prevention and treatment effect on cucumber downy mildew, indicating that the compound of the two has a significant synergistic effect on cucumber downy mildew pathogenic fungi. Especially when the ratio of benzisothiazolinone and epoxiconazol is in the range of 1:30 to 30:1, the co-toxicity coefficient of benzisothiazolinone and epoxiconazol is 140 and more, and the synergistic effect is significant.

(II) Field efficacy verification test

Test method: In the early period, the reagent was immediately sprayed for the first time, and 7 days later, the reagent was applied for the second time, each treatment had 4 sections, and each section had a size of 20 m$^2$. The incidence was investigated before application of the reagent and 10 days after the second application of the reagent, each section was randomly sampled at 5 points, 5 crops were investigated at each point, the percentage of the lesion area in the leaf area of each leave on the whole crop was investigated, the leaves were graded, and the disease index and the prevention and treatment effect were calculated.

$$\text{Disease index} = \frac{\Sigma(\text{Incidence of leaves of various levels} \times \text{Representative value of this level})}{\text{The total number of leaves} \times \text{Representative value of the highest level}} \times 100$$

$$\begin{array}{c}\text{Prevention and} \\ \text{treatment effect (\%)}\end{array} = (1 - \frac{\text{Pre} - \text{reagent control disease index} \times \text{Post} - \text{reagent treatment disease index}}{\text{Post} - \text{reagent control disease index} \times \text{Pre} - \text{reagent treatment disease index}}) \times 100$$

Expected control efficiency (%)=X+Y-XY/100 (where X and Y are control efficiency of single reagent)

Grading standard:

0 grade: Having no lesion;

1 grade: having less than 5 leaf lesions, and the length of lesions being less than 1 cm;

3 grade: having 6 to 10 leaf lesions, and the length of some lesions being greater than 1 cm;

5 grade: having 11 to 25 leaf lesions, some lesions being contiguous, and the area of the lesions being 10% to 25% of the leaf area;

7 grade: having 26 and more leaf lesions, lesions being contiguous, and the area of the lesions being 26% to 50% of the leaf area;

9 grade: lesions being contiguous, and the area of the lesions being 50% and more of the leaf area or the entire leave withering up.

**(4) Field efficacy verification test of compound benzisothiazolinone and epoxiconazol mixture on sigatoka**

Table 8 Prevention and treatment effect of compound benzisothiazolinone and epoxiconazol on sigatoka

| Serial number | Chemicals for treatment | Application amount (a.i.g/ha) | Disease index before application of reagents | 11 days after second application of chemicals | |
|---|---|---|---|---|---|
| | | | | Disease index | Control efficiency (%) |
| Embodiment 7 | 15% benzisothiazolinone emulsion in water | 96.8 | 3.11 | 9.90 | 76.2 |
| | 50% epoxiconazol suspension | 3.2 | 3.23 | 41.45 | 4.1 |
| | Expected control efficiency after mixing the two components | - | - | - | 77.2 |
| | 62% benzisothiazolinone ·epoxiconazol water dispersible granule (benzisothiazo linone: epoxiconazol ratio=60:2) | 100.0 | 3.52 | 7.49 | 84.1 |
| Embodiment 8 | 15% benzisothiazolinone emulsion in water | 3.2 | 3.81 | 47.26 | 7.3 |
| | 50% epoxiconazol suspension | 96.8 | 3.92 | 17.41 | 66.8 |
| | Expected control efficiency after mixing the two components | - | - | - | 69.2 |
| | 62% benzisothiazolinone ·epoxiconazol water dispersible granule (benzisothiazolinone: epoxiconazol ratio=2:60) | 100.0 | 3.28 | 7.55 | 82.8 |

(continued)

| Serial number | Chemicals for treatment | Application amount (a.i.g/ha) | Disease index before application of reagents | 11 days after second application of chemicals | |
|---|---|---|---|---|---|
| | | | | Disease index | Control efficiency (%) |
| Embodiment 15 | 15% benzisothiazolinone emulsion in water | 90.9 | 3.69 | 13.77 | 72.1 |
| | 50% epoxiconazol suspension | 9.1 | 3.72 | 46.44 | 6.7 |
| | Expected control efficiency after mixing the two components | - | - | - | 74.0 |
| | 55% benzisothiazolinone ·epoxiconazol suspension (benzisothiazolinone: epoxiconazol ratio=50:5) | 100.0 | 3.71 | 7.10 | 85.7 |
| Embodiment 16 | 15% benzisothiazolinone emulsion in water | 9.1 | 3.55 | 38.52 | 18.9 |
| | 50% epoxiconazol suspension | 90.9 | 3.88 | 20.40 | 60.7 |
| | Expected control efficiency after mixing the two components | - | - | - | 68.1 |
| | 55% benzisothiazolinone ·epoxiconazol suspension (benzisothiazolinone:epoxiconazol benzisothiazolinone =5:50) | 100.0 | 3.83 | 7.28 | 85.8 |
| Embodiment 26 | 15% benzisothiazolinone emulsion in water | 2.3 | 3.56 | 44.82 | 5.9 |
| | 50% epoxiconazol suspension | 97.7 | 3.34 | 14.39 | 67.8 |
| | Expected control efficiency after mixing the two components | - | - | - | 69.7 |
| | 88% benzisothiazolinone ·epoxiconazolwettable powder (benzisothiazolinone:epoxiconazol ratio=2:86) | 100.0 | 3.63 | 8.21 | 83.1 |
| Embodiment 27 | 15% benzisothiazolinone emulsion in water | 97.3 | 3.55 | 11.16 | 76.5 |
| | 50% epoxiconazol suspension | 2.3 | 3.87 | 49.76 | 3.9 |
| | Expected control efficiency after mixing the two components | - | - | - | 77.4 |
| | 86% benzisothiazolinone ·epoxiconazol wettable powder (benzisothiazolinone:epoxiconazol ratio=84:2) | 100.0 | 3.93 | 9.04 | 82.8 |

(continued)

| Serial number | Chemicals for treatment | Application amount (a.i.g/ha) | Disease index before application of reagents | 11 days after second application of chemicals | |
|---|---|---|---|---|---|
| | | | | Disease index | Control efficiency (%) |
| Embodiment 28 | 15% benzisothiazolinone emulsion in water | 50.0 | 3.59 | 25.22 | 47.5 |
| | 50% epoxiconazol suspension | 50.0 | 3.55 | 30.97 | 34.8 |
| | Expected control efficiency after mixing the two components | - | - | - | 65.8 |
| | 50% benzisothiazolinone ·epoxiconazol wettable powder (benzisothiazolinone:epoxiconazol ratio=25:25) | 100.0 | 3.42 | 6.96 | 84.8 |
| Embodiment 35 | 15% benzisothiazolinone emulsion in water | 16.7 | 3.83 | 37.00 | 27.8 |
| | 50% epoxiconazol suspension | 83.3 | 3.89 | 24.72 | 52.5 |
| | Expected control efficiency after mixing the two components | - | - | - | 65.7 |
| | 12% benzisothiazolinone ·epoxiconazol microemulsion (benzisothiazolinone: epoxiconazol ratio=2:10) | 100.0 | 3.65 | 6.40 | 86.9 |
| Embodiment 36 | 15% benzisothiazolinone emulsion in water | 66.7 | 3.87 | 25.73 | 50.3 |
| | 50% epoxiconazol suspension | 33.3 | 3.93 | 41.28 | 21.5 |
| | Expected control efficiency after mixing the two components | - | - | - | 61.0 |
| | 15% benzisothiazolinone ·epoxiconazol microemulsion (benzisothiazolinone:epoxiconazol ratio=10:5) | 100.0 | 365 | 800.92 | 83.6 |
| Embodiment 43 | 15% benzisothiazolinone emulsion in water | 95.2 | 3.68 | 12.41 | 74.8 |
| | 50% epoxiconazol suspension | 4.8 | 3.89 | 49.34 | 5.2 |
| | Expected control efficiency after mixing the two components | - | - | - | 76.1 |
| | 21% benzisothiazolinone ·epoxiconazol emulsion in water (benzisothiazolinone:epoxiconazol ratio=20:1) | 100.0 | 2.75 | 5.78 | 84.3 |
| Embodiment 44 | 15% benzisothiazolinone emulsion in water | 4.8 | 3.76 | 45.38 | 9.8 |
| | 50% epoxiconazol suspension | 95.2 | 3.55 | 15.86 | 66.6 |

(continued)

| Serial number | Chemicals for treatment | Application amount (a.i.g/ha) | Disease index before application of reagents | 11 days after second application of chemicals | |
|---|---|---|---|---|---|
| | | | | Disease index | Control efficiency (%) |
| | Expected control efficiency after mixing the two components | - | - | - | 69.9 |
| | 42% benzisothiazolinone ·epoxiconazol emulsion in water (benzisothiazolinone:epoxiconazol ratio=2:40) | 100.0 | 3.31 | 6.60 | 85.1 |
| Embodiment 51 | 15% benzisothiazolinone emulsion in water | 83.3 | 3.69 | 18.51 | 62.5 |
| | 50% epoxiconazol suspension | 16.7 | 3.82 | 43.29 | 15.3 |
| | Expected control efficiency after mixing the two components | - | - | - | 68.2 |
| | 30% benzisothiazolinone ·epoxiconazol oil suspension (benzisothiazolinone:epoxiconazol ratio=25:5) | 100.0 | 3.79 | 7.51 | 85.2 |
| Embodiment 52 | 15% benzisothiazolinone emulsion in water | 33.3 | 3.55 | 31.78 | 33.1 |
| | 50% epoxiconazol suspension | 66.7 | 3.65 | 29.20 | 40.2 |
| | Expected control efficiency after mixing the two components | - | - | - | 60.0 |
| | 45% benzisothiazolinone ·epoxiconazol oil suspension (benzisothiazolinone:epoxiconazol ratio=15:30) | 100.0 | 3.49 | 6.44 | 86.2 |
| Water control (CK) | - | - | 3.58 | 47.9 | - |

Test results (Table 8) show that, the compound benzisothiazolinone and epoxiconazol has significantly improved control efficiency on sigatoka, indicating that the compound of the two has a significant synergistic effect on sigatoka.

## Claims

1. A synergistic fungicide composition, comprising two active components A and B, wherein the active component A is benzisothiazolinone, the active component B is epoxiconazol, and the weight ratio of the two components is 1:50 to 50:1.

2. The composition according to claim 1, wherein the composition is composed of 6 wt% to 92 wt% of the active components and 94 wt% to 8 wt% of fungicide adjuvants.

3. The composition according to claim 1, wherein the weight ratio of the active component benzisothiazolinoneand the active component epoxiconazol is 1:30 to 30:1.

4. The composition according to claim 1, wherein the composition is formulated into any formulation allowable in agriculture.

5. The composition according to claim 4, wherein the composition is formulated into wettable powder, a suspension, an oil suspension, a water dispersible granule, an emulsion in water and a microemulsion.

6. A use of the composition according to any of claims 1-5 in preventing and treating food crop diseases in the agricultural field.

7. The use of the composition according to claim 6, wherein the food crop diseases are selected from cucumber downy mildew pathogenic fungi, cucumber gray mold, sigatoka, grape downy mildew and litchi blight.

8. A method for applying a synergistic fungicide composition to a plant, said method including: applying the composition according to any of claims 1-5 on the aboveground part of plants, or applying the composition in the soil in a solid form, such as in a granular form, so that the composition can get into the plant body through the plant roots from the soil.

9. The method according to claim 8, wherein the aboveground part of plants is selected from leaves and foliages.

10. The method according to any of claims 8 and 9, wherein the method is selected to be spraying, atomizing, dusting, scattering or pouring.

**Patentansprüche**

1. Synergistische fungizide Zusammensetzung, umfassend zwei aktive Bestandteile A und B, wobei der aktive Bestandteil A Benzisothiazolinon ist, der aktive Bestandteil B Epoxiconazol ist, und das Gewichtsverhältnis der zwei Bestandteile 1:50 bis 50:1 ist.

2. Zusammensetzung nach Anspruch 1, wobei die Zusammensetzung aus 6 Gew.-% bis 92 Gew.-% der aktiven Bestandteile und 94 Gew.-% bis 8 Gew.-% fungiziden Adjuvantien besteht.

3. Zusammensetzung nach Anspruch 1, wobei das Gewichtsverhältnis des aktiven Bestandteils Benzisothiazolinon und des aktiven Bestandteils Epoxiconazol 1:30 bis 30:1 ist.

4. Zusammensetzung nach Anspruch 1, wobei die Zusammensetzung in eine in der Landwirtschaft zulässige Formulierung formuliert ist.

5. Zusammensetzung nach Anspruch 4, wobei die Zusammensetzung formuliert ist in benetzbares Pulver, eine Suspension, eine Ölsuspension, ein wasserdispergierbares Granulat, eine Emulsion in Wasser und eine Mikroemulsion.

6. Verwendung der Zusammensetzung nach einem der Ansprüche 1-5 zum Verhindern und Behandeln von Nahrungspflanzenkrankheiten in dem Agrarbereich.

7. Verwendung der Zusammensetzung nach Anspruch 6, wobei die Nahrungspflanzenkrankheiten ausgewählt sind aus durch pathogene Pilze hervorgerufenem Falschem Mehltau an Gurken, Gurken-Grauschimmel, Sigatoka, Falschem Mehltau an Trauben und Litschi-Fäule.

8. Verfahren zum Anwenden einer synergistischen fungiziden Zusammensetzung an einer Pflanze, das Verfahren umfassend: Anwenden der Zusammensetzung nach einem der Ansprüche 1-5 auf dem oberirdischen Pflanzenteil oder Anwenden der Zusammensetzung in dem Boden in einer festen Form, wie beispielsweise in einer granularen Form, so dass die Zusammensetzung durch die Pflanzenwurzeln aus dem Boden in den Pflanzenkörper gelangen kann.

9. Verfahren nach Anspruch 8, wobei der oberirdische Pflanzenteil ausgewählt ist aus Blättern und Laubwerken.

10. Verfahren nach einem der Ansprüche 8 und 9, wobei das Verfahren ausgewählt ist aus Sprühen, Atomisieren, Bestäuben, Verstreuen oder Gießen.

**Revendications**

1. Composition fongicide synergique, comprenant deux composants actifs A et B, dans laquelle le composant actif A est la benzisothiazolinone, le composant actif B est l'époxiconazole, et le rapport en poids des deux composants est de 1 : 50 à 50 : 1.

2. Composition selon la revendication 1, dans laquelle la composition est composée de 6 % en poids à 92 % en poids des composants actifs et de 94 % en poids à 8 % en poids d'adjuvants fongicides.

3. Composition selon la revendication 1, dans laquelle le rapport en poids du composant actif benzisothiazolinone et du composant actif époxiconazole est de 1 : 30 à 30 : 1.

4. Composition selon la revendication 1, dans laquelle la composition est formulée en n'importe quelle formulation permise en agriculture.

5. Composition selon la revendication 4, dans laquelle la composition est formulée en une poudre mouillable, une suspension, une suspension huileuse, un granulé dispersible dans l'eau, une émulsion dans l'eau et une microémulsion.

6. Utilisation de la composition selon l'une quelconque des revendications 1 à 5 dans la prévention et le traitement des maladies des cultures vivrières dans le domaine agricole.

7. Utilisation de la composition selon la revendication 6, dans laquelle les maladies des cultures vivrières sont sélectionnées parmi les champignons pathogènes du mildiou du concombre, la moisissure grise du concombre, la sigatoka, le mildiou de la vigne et la maladie des taches brunes du litchi.

8. Procédé d'application d'une composition fongicide synergique sur une plante, ledit procédé incluant : l'application de la composition selon l'une quelconque des revendications 1 à 5 sur la partie des plantes se trouvant au-dessus du sol, ou l'application de la composition dans le sol sous forme solide, comme sous forme granulaire, de façon que la composition puisse entrer dans le corps de la plante par l'intermédiaire des racines de la plante à partir du sol.

9. Procédé selon la revendication 8, dans lequel la partie des plantes se trouvant au-dessus du sol est sélectionnée parmi les feuilles et les feuillages.

10. Procédé selon l'une quelconque des revendications 8 et 9, dans lequel le procédé est sélectionné pour être une pulvérisation, une atomisation, un poudrage, une diffusion ou un déversement.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101999372 A
- CN 102100233 A
- CN 102258037 A
- CN 102239860 A
- US 20100184792 A1
- US 2012128750 A1